# DEMANDE DE BREVET EUROPEEN

(11) **EP 0 810 240 A1**
(43) Date de publication de la demande: **03.12.1997**
(21) Numéro de dépôt: 97400995.3
(22) Date de dépôt: 02.05.1997
(51) Int. Cl.: C08F 259/04, C08F 285/00

(54) **Latex à base de copolymères du chlorure de vinyle de structure particulière, son procédé de fabrication et ses applications**

(30) Priorité: 31.05.1996 FR 9606733
(71) Demandeur: ELF ATOCHEM S.A., 92800 Puteaux (FR)
(72) Inventeur: Espiard, Philippe, 60140 Liancourt (FR); Peres, Richard, 04600 Saint Auban Sur Durance (FR); Ernst, Benoît, 27170 Beaumont-Le-Rocher (FR)

(57) **Abrégé**

La présente invention concerne des copolymères du chlorure de vinyle, sous forme de latex, dont les particules sont constituées d'un coeur, d'une couche externe et éventuellement d'une couche intermédiaire. Elle concerne également le procédé de fabrication de ce latex par polymérisation en microsuspension ensemencée et ses applications dans les peintures et plastisols.

## Description

La présente invention concerne des copolymères du chlorure de vinyle, ayant une structure constituée d'un coeur, d'une couche externe et éventuellement d'une couche intermédiaire, sous forme de latex et leur procédé de préparation par polymérisation en microsuspension ensemencée. Elle a également pour objet l'utilisation de ces copolymères et de leur latex.

On connaît des polymères vinyliques ayant une structure core-shell et susceptibles d'être utilisés dans les formulations de peintures. Les particules de ces polymères sont constituées d'un coeur et d'une écorce de composition différente de celle du coeur. Le latex à base de ces particules est généralement obtenu par polymérisation en émulsion. Ainsi, dans le document WO 95/14063 est décrite une dispersion aqueuse de particules constituées d'un coeur de copolymère obtenu par la polymérisation en émulsion de l'éthylène et d'un monomère vinylique et d'une écorce de copolymère comprenant les motifs d'un (méth)acrylate d'alkyle ayant un nombre de carbone compris entre 4 et 12 et d'au moins un monomère choisi parmi les (méth)acrylates d'alkyle ayant un nombre de carbone compris entre 1 et 3, le styrène et l'α méthyl-styrène.

Le document WO 94/20556 divulgue une dispersion de particules constituées d'un coeur de polymère contenant un ou plusieur(s) monomère(s) choisi(s) parmi les esters vinyliques, les (méth)acrylates, le chlorure de vinyle, les composés aromatiques vinyliques et l'éthylène et d'une écorce de copolymère contenant des motifs de (méth)acrylates de solubilité particulière, d'un monomère oléfinique fonctionnalisé et d'un silane insaturé hydrolysable. Le coeur représente 75 à 98 % du poids total de la particule.

Par ailleurs, le document JP-A-3-41103 divulgue une méthode d'obtention des copolymères aptes à la fabrication des plastisols stables au stockage. L'exemple 5 de ce document décrit un procédé de polymérisation en microsuspension selon lequel une partie du chlorure de vinyle à mettre en oeuvre est introduite avant la réaction et la partie restante du chlorure de vinyle et le méthacrylate de butyle sont introduits en continu, le méthacrylate étant totalement introduit avant que le taux de transformation des monomères ne dépasse 60 %. Cette méthode présente des inconvénients illustrés par les exemples comparatifs 4 et 5. En effet, il n'est pas possible d'obtenir des plastisols stables avec l'acétate de vinyle, et lorsque l'acrylate de butyle est introduit au-delà d'un taux de conversion des monomères de 60 %.

Il a maintenant été trouvé des copolymères de chlorure de vinyle, sous forme de latex, dont les particules ont une structure constituée d'un coeur enrobé d'une ou de deux couche(s). Ces particules sont caractérisées en ce qu'elles comprennent un coeur de polymères à base de chlorure de vinyle et une première couche de polymères comprenant au moins un monomère choisi dans le groupe A et éventuellement une deuxième couche de polymères à base de chlorure de vinyle. Le groupe A est formé de méthacrylates et acrylates d'alkyle, le groupe alkyle ayant un nombre de carbone compris entre 1 et 8, d'esters vinyliques des acides mono-et poly-carboxyliques. Les polymères de la première couche peuvent être réticulés ou greffés.

Par polymères à base de chlorure de vinyle, on entend les homo-et copolymères, ces derniers contenant au moins 50 % en poids de chlorure de vinyle et au moins un monomère copolymérisable avec le chlorure de vinyle. Les monomères copolymérisables sont ceux généralement employés dans les techniques classiques de copolymérisation du chlorure de vinyle. On peut citer les esters vinyliques des acides mono- et poly-carboxyliques, tels que acétate, propionate, benzoate de vinyle ; les acides insaturés mono- et poly-carboxyliques, tels que acrylique, méthacrylique, maléique, fumarique, itaconique, ainsi que leurs esters aliphatiques, cyclo-aliphatiques, aromatiques, leurs amides, leurs nitriles ; les halogénures d'alkyle, de vinyle, de vinylidène ; les alkylvinyl éthers et les oléfines.

Les monomères copolymérisables préférés sont les esters vinyliques, les (méth)acrylates d'alkyle et les halogénures de vinylidène.

Avantageusement, les homopolymères sont choisis comme polymères à base de chlorure de vinyle.

Sont avantageusement choisis dans le groupe A: l'acrylate de méthyle, d'éthyle, de propyle et de butyle, le methacrylate de méthyle, d'éthyle, de propyle et de butyle, l'acétate, le propionate et le benzoate de vinyle. L'acrylate de méthyle et l'acrylate de butyle sont particulièrement préférés.

Selon l'invention, le latex des copolymères dont les particules sont constituées d'un coeur et seulement d'une couche enrobant le coeur, a la propriété de conduire à un film après séchage à la température ambiante ou à une température inférieure ou supérieure à l'ambiante.

Les copolymères dont les particules sont constituées d'un coeur, d'une couche externe et d'une couche intermédiaire peuvent être utilisés en tant qu'additifs anti-chocs ou de transformation comme processing aid. Ils peuvent également être utilisés dans les applications plastisols et permettent ainsi d'obtenir des plastisols fluides ayant des propriétés particulières telles que la diminution de la température de gélification, la diminution de la quantité de plastifiant, l'obtention de mousses de bonne qualité cellulaire à des températures variant dans des limites très éloignées.

Un autre objet de la présente invention est un procédé de préparation de copolymères décrits ci-dessus, sous forme de latex, par polymérisation en microsuspension .

Par polymérisation en microsuspension, ou suspension fine, on entend une polymérisation, en présence d'initiateurs organo-solubles, d'au moins un monomère dispersé par des moyens mécaniques énergiques dans un milieu aqueux contenant un émulsifiant en tant que stabilisant, afin d'obtenir une dispersion de particules dont le diamètre moyen est inférieur à 5 microns.

Le procédé selon l'invention est caractérisé en ce que :
(a) l'on fait réagir au moins un monomère choisi dans le groupe A avec éventuellement un agent réticulant ou de greffage, en présence d'un polymère d'ensemencement P1 à base du chlorure de vinyle préalablement préparé par polymérisation en microsuspension et renfermant au moins un initiateur organosoluble et, qu'éventuellement,
(b) on introduit ensuite du chlorure de vinyle avec éventuellement un monomère copolymérisable pour surpolymériser le copolymère obtenu dans l'étape (a).

Le polymère d'ensemencement P1 nécessaire à la copolymérisation peut être préparé selon les techniques classiques de polymérisation en microsuspension. Par exemple, on met en oeuvre de l'eau, du chlorure de vinyle seul ou associé à un ou plusieurs monomère(s) copolymérisable(s), un émulsifiant anionique et un initiateur organosoluble. Le ou les monomère(s) sont finement dispersé(s) dans l'eau, à l'aide d'un moyen mécanique énergique, tel que moulin colloïdal, pompe rapide, agitateur à vibrations, appareil à ultra-sons. La microsuspension obtenue est alors chauffée sous pression autogène et sous agitation modérée à une température déterminée en fonction du poids moléculaire du produit que l'on souhaite obtenir.

Le polymère d'ensemencement P1 est utilisé sous forme d'une dispersion aqueuse de ses particules dont le diamètre moyen est en général compris entre 0,05 et 3 µm, et de préférence compris entre 0,2 et 1,0 µm.

Pour permettre la réalisation du procédé de l'invention, les particules du polymère d'ensemencement P1 doivent contenir une quantité suffisante d'initiateur organosoluble, de préférence comprise entre 1 et 3 % en poids par rapport au polymère d'ensemencement.

Les initiateurs organosolubles sont en général les peroxydes organiques tels que les peroxydes de lauroyle, de décanoyle, de caproyle, les perpivalates de tertiobutyle et les peroctoates de tertiobutyle.

Le choix de l'initiateur organosoluble dépend de sa vitesse de décomposition à la température de réaction adoptée. En effet, ledit initiateur doit être suffisamment réactif, afin que des doses normales, de l'ordre de 0,1 à 3 % en poids par rapport au monomère ou au mélange de monomères, permettent de réaliser la préparation du polymère d'ensemencement dans des temps compris entre 4 et 20 heures. Cependant, la vitesse de décomposition de l'initiateur ne doit pas être trop élevée, de façon que la quantité d'initiateur décomposé dans la préparation du polymère d'ensemencement ne dépasse pas la moitié de la quantité d'initiateur mis en oeuvre. Pour cela, il est donc nécessaire de choisir un initiateur dont la demi-durée de vie est telle que la proportion d'initiateur détruit, lors de la préparation du polymère d'ensemencement, est comprise entre 5 et 50 % en poids de la totalité de l'initiateur mis en oeuvre.

Les peroxydes de lauroyle sont avantageusement choisis.

Dans le cas où l'on emploie plusieurs initiateurs organosolubles, on a avantage à les choisir de réactivité différente ; les initiateurs les plus réactifs agissent principalement au cours de la préparation du polymère d'ensemencement, alors que les initiateurs les moins réactifs agissent surtout au cours de la polymérisation ensemencée du monomère ou du mélange de monomères.

Selon la présente invention, on peut opérer en présence d'un deuxième polymère d'ensemencement P2. Ce dernier est soit présent simultanément avec P1 pour la mise en oeuvre de l'étape (a), soit introduit après l'étape (a) pour la mise en oeuvre de l'étape (b).

Le deuxième polymère d'ensemencement P2 est utilisé sous forme d'une dispersion aqueuse de ses particules, dont le diamètre moyen est compris entre 0,05 et 1,5 µm, de préférence entre 0,05 et 0,8 µm et qui peuvent renfermer un initiateur.

Cette dispersion de particules peut être obtenue par les techniques classiques de polymérisation en microsuspension ou en émulsion.

La préparation du deuxième polymère d'ensemencement, lorsqu'elle est effectuée par polymérisation en microsuspension, est réalisée ainsi qu'il est décrit précédemment, mais l'homogénéisation est plus poussée si les particules à obtenir sont de très petite taille.

La préparation du deuxième polymère d'ensemencement P2 est avantageusement effectuée par polymérisation en émulsion, qui consiste à mettre en oeuvre de l'eau, du chlorure de vinyle seul ou associé à un ou plusieurs monomère(s) copolymérisable(s), un initiateur hydrosoluble et un émulsifiant anionique éventuellement associé à un émulsifiant non ionique.

La taille des particules est réglée selon les méthodes habituelles propres à la polymérisation en émulsion, telles que choix judicieux de la nature et de la quantité d'émulsifiant utilisé, mise en oeuvre de semences, modification de la vitesse d'agitation.

Le mélange réactionnel est chauffé sous pression autogène et agitation modérée à une température comprise entre 30 et 80° C. Après la chute de pression, la réaction est arrêtée et le ou les monomères non transformés sont dégazés.

Les initiateurs hydrosolubles nécessaires à la préparation du deuxième polymère d'ensemencement P2 sont généralement représentés par l'eau oxygénée, les persulfates de métaux alcalins ou d'ammonium associés ou non à des réducteurs hydrosolubles, tels que sulfites ou bisulfites de métaux alcalins. Les quantités utilisées, très variables, dépendent du système initiateur choisi et sont juste suffisantes pour assurer la polymérisation dans des temps compris entre 4 et 10 heures.

Dans le procédé selon l'invention, la quantité du polymère d'ensemencement P1 à mettre en oeuvre par rapport au poids du ou des monomère(s) mis en jeu dans l'étape (a) est en général compris entre 0,02 et 10. Lorsqu'on utilise deux polymères d'ensemencement, la proportion massique du premier P1 par rapport au deuxième P2 est comprise entre 95/5 et 5/95.

Afin d'améliorer la stabilité de la microsuspension, il peut être avantageux d'ajouter, avant et/ou après et/ou en cours de polymérisation au moins un émulsifiant anionique éventuellement associé à au moins un émulsifiant non ionique. Les émulsifiants anioniques sont de préférence représentés par les savons d'acides gras, les alkylsulfates, les alkylsulfates éthoxylés, les alkylsulfonates, les alkylaryl sulfonates, les vinylsulfonates, les allylsulfonates, les alkyl sulfosuccinates, les alkylphosphates alcalins et les émulsifiants non ioniques par les polycondensats d'oxyde d'éthylène ou de propylène sur divers composés organiques hydroxylés. Cet émulsifiant peut être le même que celui ou ceux utilisés dans la préparation du polymère d'ensemencement. On choisit de préférence le dodécylbenzène sulfonate et/ou le dodécyl sulfate de métaux alcalins.

Les quantités d'émulsifiant peuvent représenter jusqu'à 3 % en poids du ou des monomère(s).

La température de polymérisation est généralement comprise entre 30 et 80° C.

Parmi les composés du groupe A, on choisit de préférence l'acrylate de méthyle, d'éthyle, de propyle et de butyle, le methacrylate de méthyle, d'éthyle, de propyle et de butyle, l'acétate, le propionate et le benzoate de vinyle. L'acrylate de méthyle et l'acrylate de butyle sont avantageusement choisis.

La quantité totale de(s) composé(s) du groupe A introduite par rapport au poids total du ou des polymère(s) d'ensemencement et du ou des monomère(s) mis en jeu dans l'étape (b), est en général comprise entre 0,01 et 1.

L'étape (b) selon l'invention peut être mise en oeuvre en présence d'un ou de plusieurs initiateur(s) hydrosoluble(s) comme ceux décrits précédemment. De préférence on utilise le persulfate d'un métal alcalin ou d'ammonium.

Tout monomère comprenant au moins deux double liaisons réactives peut être utilisé comme agent réticulant ou de greffage. A titre d'exemple,on peut citer le methacrylate d'allyle, le diallylphtalate ou le divinylbenzène.

La vitesse de polymérisation selon l'invention peut être accélérée en activant l'initiateur inclus dans les particules du ou des polymère(s) d'ensemencement par un complexe métallique organosoluble formé tout au long de la polymérisation par réaction entre un sel métallique hydrosoluble et un agent complexant introduit progressivement, comme décrit dans le brevet français 2 234 321. La quantité de sel métallique mis en oeuvre est telle que le rapport molaire sel métallique/initiateur est compris entre 0,001 et 0,10 et de préférence compris entre 0,001 et 0,03.

Parmi les sels métalliques, on peut citer ceux du fer, cuivre, cobalt, nickel, zinc, étain, titane, vanadium, manganèse, chrome et argent. Les sels de cuivre sont particulièrement préférés.

L'agent complexant est en général choisi parmi les acides mono-ou poly-carboxyliques, alkylphosphoriques, les lactones, les cétones et les carbazones et est utilisé en quantité telle que le rapport molaire agent complexant/sel métallique est compris entre 1 et 110 et de préférence compris entre 5 et 20.

Avantageusement, l'acide ascorbique est choisi comme agent complexant.

La quantité d'eau nécessaire à la polymérisation selon l'invention est telle que la concentration initiale en polymère(s) d'ensemencement plus le ou les monomères mis en jeu, soit comprise entre 20 et 80 % et de préférence entre 45 et 75 % en poids par rapport au mélange réactionnel.

La durée de polymérisation est en général comprise entre 30 minutes et 10 heures, de préférence comprise entre 1 et 7 heures.

Les latex ainsi préparés contiennnent une ou deux population(s) de particules de polymères. Dans le cas des latex monopopulés, les diamètres moyens des particules sont en général compris entre 0,4 et 2,5 µm. Les latex bipopulés contiennent des particules présentant des diamètres moyens différents, l'un compris 0,4 et 2,5 µm et l'autre compris entre 0,08 et 1 µm, dans un rapport des diamètres compris entre 1 et 20 et de préférence compris entre 4 et 8 et un rapport pondéral compris entre 0,1 et 10 et de préférence compris entre 2 et 5 .

Les latex contenant deux populations de particules peuvent également être obtenus en mélangeant les latex monopopulés, obtenus selon l'invention, avec des dispersions aqueuses des particules de polymère d'ensemencent P1 ou P2, de préférence P2, dans un rapport des diamètres compris entre 1 et 20 et de préférence compris entre 4 et 8 et un rapport pondéral compris entre 0,1 et 10 et de préférence compris entre 2 et 5 .

Les latex mono- et bi-populés selon l'invention, conviennent tout particulièrement dans les applications de revêtement telles que peintures et plastisols sans plastifiant car ils conduisent facilement à un film après séchage.

Les copolymères du chlorure de vinyle préparés selon l'invention sont séparés du milieu de polymérisation par tous procédés connus, tels que filtration, coagulation-essorage, écaillage, décantation centrifuge et atomisation. De préférence les copolymères sont obtenus par atomisation des latex.

Les copolymères ainsi obtenus, qui se présentent sous forme de poudres particulièrement aptes à la préparation de plastisols ont une température de gelification plus basse. De plus ils conduisent à des mousses de haute qualité cellulaire dans des limites de température très éloignées. Ces copolymères peuvent également être utilisés comme additifs anti-chocs et comme processing aid.

L'invention sera mieux comprise à l'aide des exemples suivants.

### PARTIE EXPERIMENTALE

Dans ce qui suit sauf indication contraire, la solution aqueuse d'acide ascorbique utilisée contient 0,7 g d'acide ascorbique pour 1 litre d'eau et le sulfate de cuivre est le CuSO₄.5 H₂O.

### (A) Préparation du polymère d'ensemencement P1

Dans un réacteur de 800 litres, agité à 35 tours/min et régulé à 15° C, on introduit successivement :
- 375 kg d'eau
- 5 l de la solution tampon contenant 426 g de dihydrogénophosphate de potassium et 117 g de soude pure
- 11 g de paraquinone en poudre
- 6 kg de peroxyde de lauroyle
- 320 kg de chlorure de vinyle
- 48 kg d'une solution aqueuse à 10 % en poids de dodécylbenzène sulfonate de sodium,
le réacteur étant mis sous vide juste avant l'introduction du chlorure de vinyle.
On réalise ensuite une fine dispersion du chlorure de vinyle dans le milieu aqueux à une température inférieure ou égale à 35° C, en agitant le dit milieu, pendant 105 minutes, à 5 500 tours/min.
Puis, on porte le milieu réactionnel à la température de polymérisation visée de 45° C sous pression autogène, la vitesse d'agitation étant de 30 tours/min. Au cours de la polymérisation, on introduit en continu la paraquinone avec un débit constant de 10,5 g/h.
Après la chute de pression jusqu'à la valeur de 3,5 bars, c'est-à-dire après 8 heures, on dégaze le chlorure de vinyle qui n'a pas réagi. On obtient ainsi un latex dont les particules ont un diamètre moyen d'environ 0,55 µm et renferment environ 2 % en poids par rapport au polymère, de peroxyde de lauroxyle.

### (B) Préparation du polymère d'ensemencement P2

(B.1 ) Dans un réacteur de 800 litres muni d'un agitateur on introduit
   415 Kg d'eau
   1,25 Kg d'acide laurique et
   0,8 Kg de soude pure.
   On porte ensuite le mélange à la température de 65°C et on le maintient pendant une heure à cette température. Le mélange est alors refroidi jusqu'à 55°C, puis le réacteur est mis sous vide. Tout en maintenant la température du milieu à 55°C, on introduit ensuite 400 Kg de chlorure de vinyle, 4 litres d'une solution aqueuse contenant 109 g de persulfate d'ammonium et puis on ajoute en continu avec un débit constant de 3 I/h, une solution aqueuse contenant dans 30 litre d'eau, 0,72 g de sulfate de cuivre, 18 g de metabisulfite de potassium et 0,54 litre de l'ammoniaque 12 N. Trois heures après l'introduction du persulfate, on ajoute pendant 5 heures en continu à 8 I/h dans le milieu réactionnel, une solution aqueuse contenant 4,56 Kg de dodécylbenzène sulfonate de sodium pour 40 litres d'eau. Lorque la pression interne est de 4,5 bars, on arrête la réaction par refroidissement rapide et on introduit ensuite une solution aqueuse de dodécylbenzène sulfonate de sodium contenant 7,28 Kg d'extrait sec. Les particules de polymères obtenus ont un diamètre moyen voisin de 0,11 µm.
( B.2 ) Dans un réacteur de 28 litres muni d'un agitateur on introduit
   9650 g d'eau
   100 cm³ d'une solution aqueuse contenant
   0,975 g d'éthylène diamine tetracétique (EDTA)
   0,191 g de sulfate de fer
   1,78 g de sulfosuccinamate de sodium
   9,8 g d'acide laurique et
   3,25 g de soude pure.

Le réacteur est ensuite mis sous vide avant l'introduction de 7000 g de chlorure de vinyle. Puis on porte le milieu réactionnel à la température visée de 58° C. Dès que le milieu atteint 45°C, on introduit en continu une solution aqueuse contenant 3,5 g de persulfate de potassium pour 1 litre d'eau. Une heure après le début d'introduction de cette dernière, on ajoute en continu à débit constant pendant 4 heures, un litre de solution contenant 56 g de dodécylbenzène sulfonate.
Lorsque la pression interne est de 4 bars, le réacteur est remis à l'air puis refroidi. Au bout de 4 heures et 30 minutes de polymérisation, la concentration en poids de polymère est de 41 % et le taux de transformation du chlorure de vinyle est de 93%. Le diamètre moyen des particules de polymère est de 0,2 µm.

### (C) EXEMPLES

### Exemple 1 à 4

On mélange :
0,14 g de dihydrogénophosphate de potassium
5,3 mg de sulfate de cuivre
140 g considérés à l'état sec du latex de polymère d'ensemencement P1 .
et 810 g d'eau déminéralisée.
On introduit ensuite, à température ambiante, le mélange aqueux dans un autoclave de 2 litres muni d'un agitateur; puis on fait le vide tout en agitant le mélange. Au bout de 15 minutes d'agitation, on introduit 140 g d'acrylate de butyle et on chauffe alors à 58° C et on maintient cette température pendant toute la durée de la réaction.
Dès que le milieu atteint 53° C, on commence l'introduction en continu de la solution aqueuse d'acide ascorbique de façon à introduire au total 0,03 g d'acide ascorbique.
On arrête le chauffage au bout de 100 minutes, 2 heures, 4 heures et 5 heures de polymérisation.
On obtient une dispersion de copolymères dont la concentration en poids et le taux de transformation total d'acrylate de butyle sont reportés dans le Tableau 1. Le diamètre moyen des particules est de 0,59 µm quel que soit la durée de polymérisation.

**TABLEAU 1**

| **Exemple** | **Durée (h)** | **Concentration (%)** | **Taux de transformation %** |
|---|---|---|---|
| 1 | 1 h 40 | 22,4 | 99 |
| 2 | 2 | 18,7 | 99 |
| 3 | 4 | 18,2 | 99 |
| 4 | 5 | 19,8 | 99 |

### Exemple 5

On opère comme décrit à l'exemple 2, sauf que l'on introduit 196 g d'acrylate de butyle.

La concentration de copolymère dans le milieu aqueux est de 18,4 % et le taux de transformation de l'acrylate de butyle est de 99 %. Le diamètre moyen des particules de copolymère est de 0,65 µm.

### Exemple 6

On opère comme décrit à l'exemple 1 sauf que l'on utilise de l'acrylate de méthyle à la place de l'acrylate de butyle et que la durée de réaction est de 80 minutes. Le taux de transformation de l'acrylate de méthyle à la fin de la réaction est de 98 % et la concentration du copolymère dans le milieu aqueux est de 19,7 %. Le diamètre moyen des particules du copolymère est de 0,59 µm.

### Exemple 7

On opère comme décrit à l'exemple 1 sauf qu'au bout d'une heure de réaction, on introduit 650 g du chlorure de vinyle et en continu 19,7 g d'une solution aqueuse de dodécylsulfate de sodium à 26,3 % d'extrait sec et la solution aqueuse d'acide ascorbique.

Au bout de 4 h et 30 minutes après l'addition du chlorure de vinyle, on arrête le chauffage et on refroidit l'autoclave. La concentration du copolymère présent dans le milieu aqueux est de 37 %, le taux de transformation du chlorure de vinyle est de 95 % et le diamètre moyen des particules de copolymères est de 1,15 µm.

### Exemple 8

On opère comme décrit à l'exemple 7 sauf que l'on utilise l'acrylate de méthyle à la place de l'acrylate de butyle. Au bout de 5,5 heures de réaction à partir de l'introduction du chlorure de vinyle, on arrête le chauffage et on refroidit le réacteur. La concentration du copolymère présent dans le milieu aqueux est de 35 % et le taux de transformation du chlorure de vinyle est de 96 %. Le diamètre moyen des particules du copolymère est de 1,14 µm.

### Exemple 9

Dans un réacteur de 28 litres muni d'un agitateur et préalablement mis sous vide, on introduit successivement par aspiration :
7500 g d'eau déminéralisée
1,5 g dihydrogénophosphate de potassium
56 mg de sulfate de cuivre
1000 g considéré à l'état sec du latex de polymères d'ensemencement P1.
et 2100 g d'eau déminéralisée.

Le réacteur à température ambiante, sous agitation et contenant le mélange aqueux est de nouveau mis sous vide. Puis, on introduit 1400 g d'acrylate de butyle et on chauffe alors à 58° C. Lors de la montée en température, on met le réacteur sous une pression d'un bar à l'aide de l'azote. Dès que le milieu atteint 54° C, on introduit en continu environ 120 ml de la solution aqueuse d'acide ascorbique dans les 30 premières minutes, puis en quantité variable en fonction de l'exothermie de la réaction. Au bout de 105 minutes, après le début de l'introduction de la solution aqueuse d'acide ascorbique, on arrête le chauffage et on refroidit rapidement le réacteur. Lorsque la température est descendue jusqu'à 50° C, le réacteur est mis sous pression atmosphérique.

La concentration du copolymère dans le milieu aqueux est de 20 % en poids et le taux de transformation de l'acrylate de butyle est de 85 %.

### Exemple 10

On opère comme à l'exemple 9 sauf qu'au bout d'une heure après le début de l'introduction de l'acide ascorbique, on arrête le chauffage puis on introduit 6000 g du chlorure de vinyle.

On chauffe à nouveau le réacteur et dès que le milieu atteint 53° C, on introduit en continu la solution aqueuse d'acide ascorbique suivi une heure après d'une solution aqueuse contenant 53 g de dodécylsulfate et de 144 mg de soude pour un litre d'eau. Cette dernière est introduite pendant 4 heures avec un débit constant tel que le volume total introduit est d'un litre.

Lorsque la chute de pression du milieu réactionnel est de 4 bars, on arrête l'introduction de l'acide ascorbique et on arrête le chauffage et refroidit rapidement le réacteur.

La concentration du copolymère dans le milieu aqueux est de 30 %, le taux de transformation du chlorure de vinyle est de 84 % et le diamètre moyen des particules est de 1,15 µm.

### Exemple 11

On opère de façon identique à l'exemple 10 sauf qu'à la place du dodécylsulfate de sodium, on utilise du dodécyl benzène sulfonate de sodium.

La concentration du copolymère dans le milieu aqueux est de 35 % en poids et le taux de transformation du chlorure de vinyle est de 84 %. Le diamètre moyen des particules du copolymère est de 1,22 pm.

### Exemple 12 comparatif

On mélange :
0,14 g du dihydrogénophosphate de potassium
5,3 mg de sulfate de cuivre
46 g considérés à l'état sec du latex du produit d'ensemencement P1
1000 g d'eau déminéralisée

On introduit ensuite à température ambiante, le mélange aqueux dans un autoclave de 2 litres muni d'un agitateur puis on fait le vide tout en agitant le mélange.

700 g de chlorure de vinyle sont introduites dans le réacteur et on chauffe alors à 58° C sous pression autogène.

Dès que le milieu aqueux atteint 53° C, on introduit en continu à débit constant et pendant 5 heures, la solution aqueuse d'acide ascorbique de sorte que la quantité totale d'acide ascorbique s'élève à 0,03 g. Après la première heure d'introduction d'acide ascorbique, on introduit de façon continue et à débit constant pendant 4 heures une solution aqueuse de dodécylsulfate de sodium à 133 g/litre.

Le débit est tel que la quantité totale de dodécylsulfate de sodium introduite, soit égale à 5,6 g.

Dès que la chute de la pression du milieu réactionnel est de 4 bars, on arrête le chauffage et on refroidit rapidement le réacteur.

On obtient ainsi un latex ayant une concentration de polymère de 42 % en poids. Le taux de transformation du chlorure de vinyle est de 92 % et le diamètre moyen est de 1,19 µm.

### Exemple 13 comparatif

On opère de façon identique qu'à l'exemple 12 sauf que l'on utilise du dodécylbenzène sulfonate de sodium à la place du dodécylsulfate de sodium.

A la fin de l'opération, le latex a une concentration de polymères de 41 % en poids et le diamètre moyen des particules du polymère est de 1,16 µ. Le taux de transformation du chlorure de vinyle est de 83 %.

### Exemple 14

On opère comme décrit à l'exemple 7 sauf que l'on utilise 196 g d'acrylate de butyle. La concentration en copolymère dans le milieu aqueux est de 34,1 % en poids et le taux de transformation du chlorure de vinyle est de 92 %. Le diamètre moyen des particules de copolymère est de 1,24 µm.

### Exemple 15

On opère comme à l'exemple 7 sauf que l'on utilise une solution aqueuse de dodécylbenzène sulfonate de sodium à la place de dodécylsulfate de sodium.

A la fin de la réaction, on obtient un latex avec une concentration en copolymère de 35 % et dont le diamètre moyen des particules de copolymère est de 1,24 µ. Le taux de transformation du chlorure de vinyle est de 92 %.

### Préparation de plastisols

100 parties des résines obtenues après atomisation des latex préparés à l'exemple 8 et 13 à 16 sont mélangées avec 45 parties du dioctylphtalate.

Les caractéristiques des plastisols résultants sont reportés dans le Tableau II. Le rhéomètre utilisé est du type Brookfield et les mesures ont été effectuées à 25° C au bout de 30 minutes et 24 heures. Les plastisols à base de copolymères selon l'invention sont moins jaunes que les homopolymères du chlorure de vinyle. (YI est le coefficient de jaunissement et R est le rapport des Yl par rapport au homopolymère.)

**Tableau 2**

| **Exemples** | **Température de gélification (°C)** | **Viscosité Brookfield 1/2 h en poises** | **Viscosité Brookfield après 24 h (poises)** | **YI jaunissement** | **R rapport YI** |
|---|---|---|---|---|---|
| 12 | 114 | 385 | 1450 | 32,5 | 1 |
| 7 | 110 | 365 | 1480 | 29,2 | 0,9 |
| 14 | 104 | 380 | 1610 | 22,5 | 0,69 |
| 13 | 115 | 280 | 1140 | 31,1 | 1 |
| 15 | 105 | 210 | 1400 | 21,7 | 0,7 |

### Préparation des films

Les latex préparés à partir des exemples 1 à 6 et 9 sont versés dans des moules et puis laissés à température ambiante. Après évaporation de l'eau, on obtient des films présentant des caractéristiques élastomères.

### Exemple 16

Dans un réacteur de 28 litres muni d'un agitateur et préalablement mis sous vide, on introduit successivement par aspiration :
7200 g d'eau déminéralisée
1,2 g de dihydrogénophosphate de potassium
4,5 mg de sulfate de cuivre
222 g considérés à l'état sec du latex de polymère d'ensemencement P1.

La vitesse d'agitation est alors de 80 tours/min et le milieu aqueux est à la température ambiante. On introduit ensuite 311 g d'acrylate de butyle, puis le réacteur est mis sous une pression d'un bar à l'aide de l'azote. On porte alors en 30 minutes le milieu réactionnel à la température visée de 58° C.

Dès que la température du milieu atteint 53° C, on introduit en 15 minutes 50 ml d'acide ascorbique, puis en continu en quantité variable suivant l'exothermie de la réaction. Au bout de 45 minutes après le début de l'introduction de l'acide ascorbique, on arrête le chauffage et on refroidit le réacteur. Lorsque la température est descendue à 35° C, le réacteur est mis sous vide. Puis, on introduit 216 g considérés à l'état sec du latex de polymère d'ensemencement P2, préparé selon (B.1). Le réacteur est de nouveau mis sous vide avant d'introduire 6000 g de chlorure de vinyle. On porte alors en 30 minutes, le milieu réactionnel à la température visée de 58° C. Dès que la température du milieu atteint 53° C, on introduit en continu la solution aqueuse de l'acide ascorbique, soit 120 ml pendant les 30 premières minutes suivi d'un débit variable suivant l'exothermie de la réaction.

Une heure après le début de l'introduction de l'acide ascorbique, on introduit à débit constant, pendant 4 heures un litre de la solution aqueuse contenant 4,8 g de dodécyl sulfate de sodium et 144 mg de soude pure.

Lorsque la chute de pression du milieu est de 4 bars, on arrête le chauffage, l'introduction de l'acide ascorbique et on réduit la vitesse d'agitation. Le chlorure de vinyle non réagi sont éliminés par dégazage. On obtient un latex dont la concentration en copolymères est de 35 %. Le taux de transformation du chlorure de vinyle est de 86 %.

L'analyse granulométrique montre que le copolymère est formé de deux populations dont les particules ont respectivement des diamètres moyens de 0,13 µm et 1,04 µm. Les particules fines représentent 9 % en poids du copolymère.

### Exemple 17

On opère comme décrit à l'exemple 16 sauf que le latex de polymère d'ensemencement P2 est introduit avec celui de P1. Le taux de transformation du chlorure de vinyle est de 93 % et le latex obtenu a une concentration en polymères de 34 % en poids.

L'analyse granulométrique montre que le copolymère est formé de 2 populations dont les particules ont respectivement des diamètres moyens de 0,15 µm et 1,05 µm. Les particules fines représentent 16 % en poids du copolymère.

### Exemple 18

On opère comme décrit à l'exemple 17 sauf que l'on introduit 0,15 g de persulfate de sodium en même temps que l'introduction du chlorure de vinyle.

### Exemple 19

On opère comme décrit à l'exemple 18 sauf que l'on introduit 0,5 g de persulfate de sodium.

### Exemple 20

On opère comme décrit à l'exemple 19 sauf que l'on introduit 300 g d'acrylate de butyle, 9825 g d'eau, 7500 g de chlorure de vinyle, 278 g considéré à l'état sec du latex de polymère P2 et 270 g de celui de P1, 1,5 g de dihydrogénophosphate de potassium, 56 mg de sulfate de cuivre, 60 g de dodécylbenzènze sulfonate de sodium et 180 mg de soude.

### Exemple 21

On opère comme décrit à l'exemple 20 sauf que l'on introduit 322 g d'acrylate de méthyle à la place d'acrylate de butyle.

### Exemple 22

On opère comme décrit à l'exemple 21 sauf que l'on introduit 0,15 g de persulfate de sodium.

### Exemple 23 comparatif

On opère comme décrit à l'exemple 17 sauf que l'on opère en l'absence de monomère du groupe A.

Les caractéristiques des latex préparés suivant les exemples 18 à 23 sont reportés dans le Tableau III.

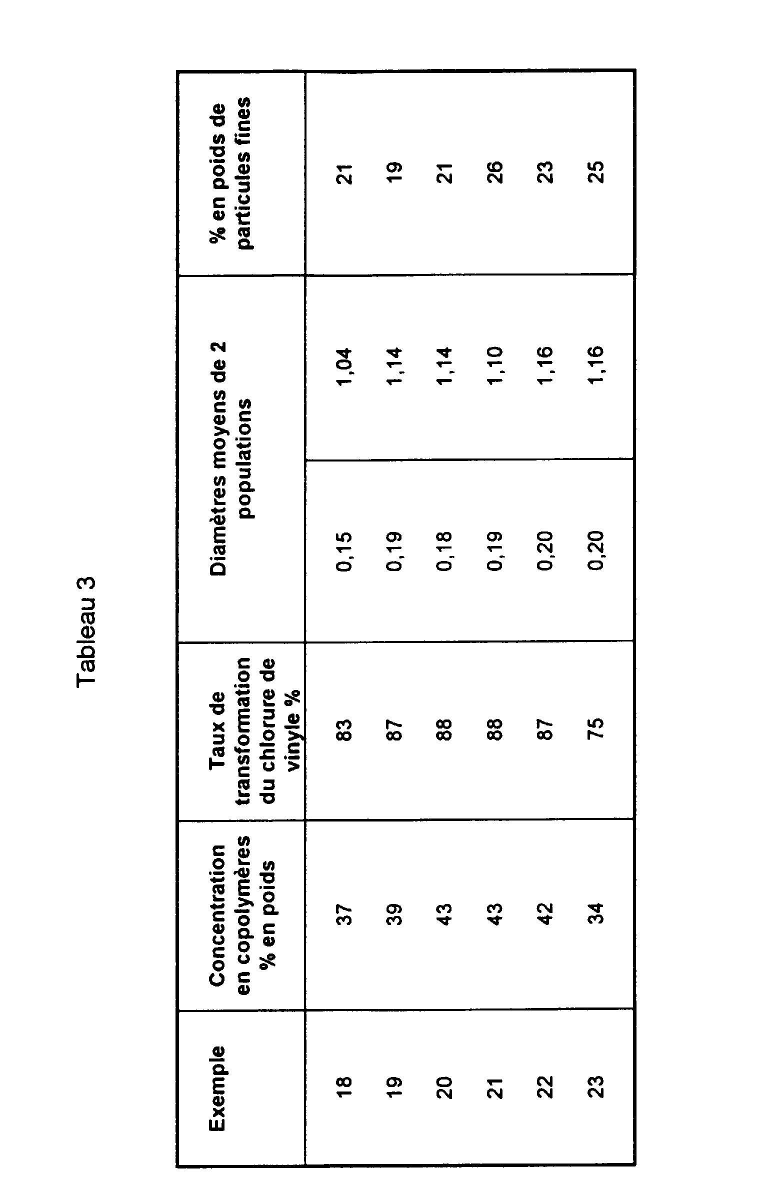

### Préparation des plastisols

Le latex à partir des exemples 19 et 21 à 23 est ensuite atomisé, puis la poudre obtenue est broyée. On prépare un plastisol en mélangeant 100 parties en poids du copolymère broyé avec 100 parties en poids de phtalate de dioctyle.

240 g considérés à l'état sec du latex de l'exemple 11 sont mélangés avec 60 g considérés à l'état sec du latex de P2, préparé selon (B.2), dont le diamètre moyen des particules est de 0,2 µm, puis le mélange est atomisé. La poudre obtenue est alors broyée puis mélangée avec le phtalate de dioctyle dans les mêmes proportions que la poudre obtenue du latex de l'exemple 19.

La température de gélification pour chaque plastisol est reportée dans le Tableau IV et leur propriétés rhéologiques sont mesurées à l'aide d'un rhéomètre rotationnel type Brookfield RTV à 25° C et au bout de 30 minutes.

**Tableau 4**

| **Exemple** | **Température de gélification °C** | **Viscosité Brookfield (poises)** |
|---|---|---|
| 19 | 80 | 85 |
| 21 | 72 | 87 |
| 22 | 70 | 88 |
| 23 | 95 | 90 |
| 24 | 80 | 85 |

n = on désigne par exemple 24, le latex résultant du mélange de latex de l'exemple 11 et de celui du polymère P2, préparé selon (B.2)

### Préparation de mousses

100 parties de la poudre obtenue après atomisation du latex des exemples 19 et 21 à 24 sont mélangées avec 65 parties de dioctylphtalate, 2,5 parties d'azodicarbonamide et 2 parties d'un activateur. Le mélange résultant est d'abord enduit, puis placé dans un four à 195 ° C pendant 150 secondes. Les mousses ainsi préparées présentent de très bonne qualité cellulaire ( cellules très fines ).

Le mélange obtenu à partir du latex de l'exemple 19 et 24 permettent de plus d'obtenir des mousses de bonne qualité cellulaire à des températures inférieures à 195 °C et en général à partir de 130° C.

## Revendications

1. Procédé de préparation d'un latex de copolymères par polymérisation en microsuspension caractérisé en ce que
(a) l'on fait réagir au moins un monomère choisi dans le groupe A, formé de méthacrylates et d'acrylates d'alkyle, le groupe alkyle ayant un nombre de carbone compris entre 1 et 8, et d'esters vinyliques des acides mono- et poly-carboxyliques avec éventuellement un agent réticulant ou de greffage, en présence d'un polymère d'ensemencement P1, à base de chlorure de vinyle préalablement préparé par polymérisation en microsuspension et renfermant au moins un initiateur organosoluble, et qu'éventuellement (b) on introduit ensuite du chlorure de vinyle avec éventuellement un monomère copolymérisable pour surpolymériser le copolymère obtenu dans l'étape (a).

2. Procédé selon la revendication 1 caractérisé en ce que l'étape (a) est mise en oeuvre en présence d'un deuxième polymère d'ensemencement P2.

3. Procédé selon la revendication 1 caractérisé en ce que l'étape (b) est mise en oeuvre en présence d'un deuxième polymère d'ensemencement P2.

4. Procédé selon la revendication 2 ou 3 caractérisé en ce que le polymère d'ensemencement P2 est préparé par polymérisation en émulsion.

5. Procédé selon la revendication 4 caractérisé en ce que le diamètre moyen des particules du polymère P2 est inférieur à celui des particules de P1.

6. Procédé selon l'une quelconque des revendications 2 à 5 caractérisé en ce que la surpolymérisation de l'étape (b) est effectuée en présence d'un initiateur hydrosoluble.

7. Procédé selon la revendication 6 caractérisé en ce que l'initiateur hydrosoluble est le persulfate d'un métal alcalin ou d'ammonium.

8. Procédé selon l'une quelconque des revendications 1 à 7 caractérisé en ce qu'un agent émulsifiant est ajouté avant et/ou après et/ou en cours de polymérisation.

9. Procédé selon l'une quelconque des revendications 1 à 8 caractérisé en ce que la vitesse de polymérisation est accélérée par activation de l'initiateur inclus dans les particules du ou des polymères d'ensemencement.

10. Procédé selon l'une quelconque des revendications 1 à 9 caractérisé en ce que le monomère du groupe A est choisi parmi l'acrylate de butyle et l'acrylate de méthyle.

11. Latex à base de copolymères du chlorure de vinyle dont les particules sont constituées d'un coeur de polymère à base de chlorure de vinyle et d'une couche de polymère comprenant au moins un monomère du groupe A, formé de méthacrylates et d'acrylates d'alkyle, le groupe alkyle ayant un nombre de carbone compris entre 1 et 8, et d'esters vinyliques des acides mono- et poly-carboxyliques, et éventuellement un agent réticulant ou de greffage.

12. Latex selon 11 caractérisé en ce que les particules sont enrobées d'une deuxième couche de polymère à base de chlorure de vinyle.

13. Film obtenu par séchage du latex selon la revendication 1 ou 2 et l'une quelconque des revendications 4 à 11.

14. Copolymères du chlorure de vinyle obtenus par séchage du latex selon l'une quelconque des revendications 1 à 12.

15. Plastisols à base des copolymères selon la revendication 14.

16. Additifs anti-chocs à base des copolymères selon la revendication 14.

17. Mousses à base de copolymères selon la revendication 14.

18. Mousses à base de plastisols selon la revendication 15.
